Europäisches Patentamt

European Patent Office

Office européen des brevets

(11) Veröffentlichungsnummer: **0 438 125 A2**

(12) **EUROPÄISCHE PATENTANMELDUNG**

(21) Anmeldenummer: 91100424.0

(22) Anmeldetag: 15.01.91

(51) Int. Cl.5: **B65G 61/00, B65G 57/22**

(30) Priorität: 19.01.90 DE 4001513

(43) Veröffentlichungstag der Anmeldung:
24.07.91 Patentblatt 91/30

(84) Benannte Vertragsstaaten:
AT BE CH DK ES FR GB IT LI NL SE

(71) Anmelder: Gämmerler, Hagen
Ichoring 44
W-8021 Icking(DE)

(72) Erfinder: Hast, Michael
Geranienstrasse 6a
W-8000 München 70(DE)
Erfinder: Simon, Peter-Jörgen
Am Schlossöark 8
W-8035 Gauting(DE)
Erfinder: Weber, Rainer
Schalmaienweg 12
W-8192 Geretsried(DE)

(74) Vertreter: Staeger, Sigurd, Dipl.-Ing. et al
Patentanwälte Dipl.-Ing. S. Staeger Dipl.-Ing.
Dipl.-Wirtsch.-Ing. R. Sperling Müllerstrasse
31
W-8000 München 5(DE)

(54) Vorrichtung zum Palettieren gleichförmiger Gegenstände.

(57) Bei einer Vorrichtung zum Palettieren von Stapeln aus mehrlagigen gefalzten Papierprodukten, nach einem vorbestimmten Ablegeschema, mit mindestens einem Einlaufförderer, einer Zu- und einer Abförderung für jeweils eine leere bzw. beladene Palette, erfolgt die Übergabe der einzelnen Gegenstände vom Einlaufförderer zur Palette mittels eines in einer waagerechten Ebene bewegbaren mehrteiligen Armes mit mindestens drei Gelenken, wobei das freie Ende des Armes als drehbarer und in der Höhe verstellbarer Greifer für den einzelnen Gegenstand ausgebildet und die Palette entsprechend der Beladung in der Höhe verstellbar ist.

FIG. 1

## VORRICHTUNG ZUM PALETTIEREN GLEICHFÖRMIGER GEGENSTÄNDE

Die Erfindung bezieht sich auf eine Vorrichtung zum Palettieren gleichförmiger, druckempfindlicher Gegenstände, insbesondere von Stapeln aus gegebenenfalls mehrlagigen gefalzten Papierprodukten, nach einem vorbestimmten Ablegeschema, mit mindestens einem Einlaufförderer, einer Zu- und Abförderung für jeweils eine leere bzw. beladene Palette.

Aus der DE-PS 31 07 495 ist eine derartige Vorrichtung bekannt. Diese bekannte Vorrichtung arbeitet nach dem Verschiebeprinzip der einzelnen Gegenstände bzw. Zuschnittstapel aus bedruckten Zeitungen oder dergleichen. Der technische Aufwand für diese bekannte Vorrichtung ist demzufolge sehr hoch.

Der Erfindung liegt die Aufgabe zugrunde, eine Vorrichtung der eingangs erwähnten Art zu schaffen, die nicht nur auf relativ engem Raum untergebracht werden kann, sondern auch in ihrer Wirkungsweise den jeweils sich ergebenden Erfordernissen leicht angepaßt werden kann.

Die Aufgabe wird dadurch gelöst, daß erfindungsgemäß die Übergabe der einzelnen Gegenstände vom Einlaufförderer zur Palette mittels eines in einer waagerechten Ebene bewegbaren mehrteiligen Armes mit mindestens drei Gelenken erfolgt, wobei das freie Ende des Armes als drehbarer und in der Höhe verstellbarer Greifer für den einzelnen Gegenstand ausgebildet und die Palette entsprechend der Beladung in der Höhe verstellbar ist.

Durch eine elektronische Steuerung kann der Bewegungsrhythmus des Armes in vielfacher Weise verändert oder abgewandelt werden, so daß die erfindungsgemäße Vorrichtung veränderten Abmessungen der Gegenstände, z.B. der Druckschriftenpakete ohne besondere Schwierigkeiten angepaßt werden kann. Derartige Veränderungen können sich auch z.B. bei kreuzverlegten Stapeln von Signaturen oder anders ausgebildeten Druckschriftenpakete ergeben.

Nach einer bevorzugten Ausführungsform der Erfindung ist ein Vorrat unbeladener Paletten stapelförmig ausgebildet und ist jeweils die unterste Palette in Wirkstellung bringbar. Auf diese Weise ist ein Aufstapeln neuer Paletten ohne Beeinträchtigung der Palettiervorrichtung möglich.

Der Arm kann an der Unterseite eines L-förmigen oder portalartigen Trägers gelenkig angeordnet sein. Wie bereits erwähnt, kann das Ablegeschema durch Verstellen der Armbewegung veränderbar sein.

Eine andere oder eine zusätzliche Möglichkeit zum Verändern des Ablegeschemas ist dann gegeben, wenn zwischen dem Einlaufförderer und dem Arm eine Drehscheibe o.dgl. für die Gegenstände vorgesehen ist.

Nach einer besonders bevorzugten Ausführungsform der Erfindung sind mindestens zwei Drehachsen des Armes mit jeweils einem gesonderten Elektromotor und einem Getriebe versehen. Der Träger des Armes und das Drehlager des letzteren am/im Träger können stationär sein. Auf diese Weise wird eine besonders kompakte Bauweise erreicht.

Zwischen dem Einlaufförderer und dem Arm kann ein Hubtisch eingeschaltet sein. Dies wird dann erforderlich sein, wenn der Einlaufförderer die Gegenstände mit unterschiedlichen Höhenlagen abgibt.

In bevorzugter Weise ist die untere in die Wirkstellung bringbare Palette horizontal verschiebbar. Auch die dafür erforderliche Steuerung kann über die zentrale elektronische Schaltanlage erfolgen.

Nach einer weiteren abgewandelten Ausführungsform der Erfindung ist eine intermittierend betätigbare Hubvorrichtung für die zu beladene Palette vorgesehen, welche aus einem Motor und einer Ausgleichsvorrichtung besteht; letztere kann aus einem Kettenzug und einem Gegengewicht bestehen.

Der Greifer ist zweckmäßigerweise an einer drehbaren und in der Höhe verstellbaren Stange angebracht.

Auf der Zeichnung ist eine beispielsweise Ausführungsform der Erfindung in stark schematisierter Form dargestellt; sie wird nachfolgend näher beschrieben. Es zeigt:

Fig. 1      eine Seitenansicht auf die gesamte Vorrichtung,

Fig. 2      eine Draufsicht auf die gesamte Vorrichtung und

Fig. 3      einen Schnitt gemäß Line 3-3 in Fig. 2.

Eine Vorrichtung oder eine Anlage zur Palettierung von druckempfindlichen Gegenständen, insbesondere kreuzverlegten Stapeln von gefalzten Papierprodukten bzw. Signaturen besteht aus mehreren Baugruppen.

Eine Baugruppe 1, bestehend aus einem Palettenportal, hat z.B. eine Länge von etwa 3,20 m und eine Breite von etwa 1,50 m. Das Palettenportal ist aus vier Säulen 2, zwei Längsträgern 3 und zwei Querträgern 4 zusammengesetzt. Die Höhe des Palettenportals kann 2,70 m betragen.

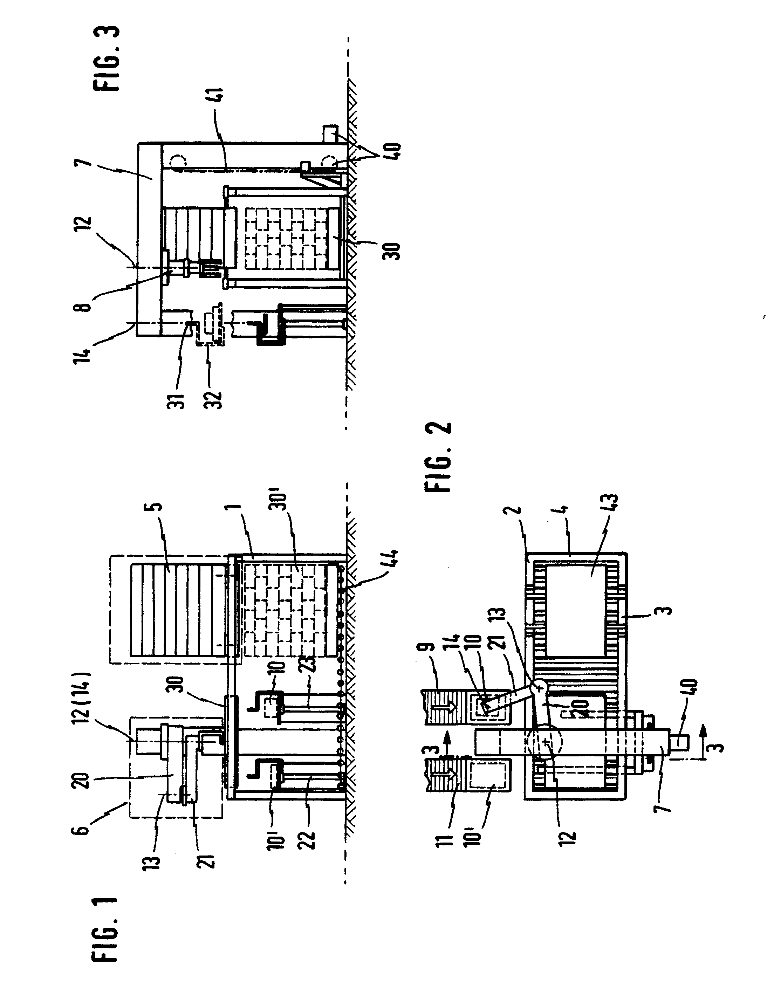

Wie aus Fig. 1 ersichtlich ist, ist der rechte Abschnitt des Palettenportals für eine weitere Baugruppe, nämlich die Plattenversorgung 5, vorgesehen.

Der linke Abschnitt des Palettenportals ist oberhalb der Längsträger 3 mit einer Baugruppe "Handling" 6 versehen. Die Baugruppe Handling 6 besteht aus einem stationären Portal 7, an deren Innenseite ein weiter unten näher zu beschreibender Dreigelenkarm bzw. Manipulator 8 ortsfest angebracht ist.

Wie aus Fig. 2 ersichtlich ist, ist ein Zuführer 9 für die einzelnen Gegenstände, also z.B. die Zuschnittstapel von Signaturen 10 vorgesehen. Es liegt auf der Hand, daß auch ein zweiter Zuführer 11 entsprechend in die Anlage eingeschaltet werden kann.

Wie aus Fig. 2 ersichtlich ist, haben die einzelnen Zuschnittstapel 10 eine rechteckige, von einem Quadrat abweichende Form; selbstverständlich können auch im Querschnitt quadratische Gegenstände palettiert werden.

Das Herzstück der Anlage ist der Dreigelenkarm 8, der wie bereits bemerkt, an der Unterseite des Portals 7 ortsfest, jedoch drehbar angebracht ist.

Mit strichpunktierten Linien 12, 13 und 14 sind die drei Drehachsen des zweiarmigen Hebelarmes oder Manipulators 8 angedeutet.

Der Manipulator besteht aus einem unteren Arm 21 und einem oberen Arm 20; diese Arme sind durch das Gelenk 13 miteinander verbunden und untereinander angeordnet, so daß der Manipulator vollständig unter dem Portal 7 durchgeschwenkt werden kann.

Selbstverständlich kann der Manipulator auch Gegenstände greifen, die vom zweiten Zuführer 11 angeliefert werden.

Da die Zulieferer u.U. die einzelnen Gegenstände in verschiedenen Höhenlage anliefern, sind Hubkolben 22 bzw. 23 vorgesehen, um die einzelnen Gegenstände 10 bzw. 10' auf das Niveau einer Palette 30 anzuheben.

Während die Gegenstände 10 bzw. 10' jeweils an der gleichen Stelle ergriffen werden, erfolgt die Ablage nach einem vorbestimmten Ablageschema.

Um der Tatsache gerecht zu werden, daß die Gegenstände diesem Ablageschema angepaßt werden müssen, weist das freie Ende des Armes 21 einerseits eine auf- und absenkbare Stange 31 und andererseits einen daran angebrachten drehbaren Greifer 32 auf. Während also die beiden Arme 20 und 21 nur eine reine Verschwenkbewegung ausführen, ist das freie Ende des Armes 8 nicht nur drehbar und mit einem Greifer versehen, sondern auch in der Höhe verstellbar.

Nach Fertigstellung einer Lage nach dem vorgesehenen Ablageschema wird die Palette mit dieser Lage oder mit den entsprechenden Lagen jeweils lagenweise abgesenkt, so daß die Ablage mittels des Armes 8 jeweils in einer bestimmten Höhe erfolgt.

An jeder Gelenkstelle 12 bis 14 ist ein besonderer Elektromotor vorgesehen, der von einer zentralen Schaltpultanlage gesteuert wird. Der Bewegungsrhythmus des Armes einschließlich der Absenkbewegung am freien Ende desselben ist vorprogrammiert und erfolgt somit selbsttätig.

Ein weiterer Elektromotor 40 betätigt die intermittierende Absenkung der Palette 30 jeweils nach Ablage einer vollständigen Schicht. Dieser Elektromotor betätigt einen Kettenzug 41, welcher mit einem Gegengewicht versehen ist, um eine Entlastung des Motors bei der Absenkung der Palette 30 zu ermöglichen.

Die Palettenversorgung kann ebenfalls selbsttätig erfolgen; ein Stapel von Paletten 43 ist oberhalb des rechten Abschnitts des Palettenportals vorgesehen. Dieser Stapel kann von oben jederzeit und unabhängig von dem Betrieb der Palettiervorrichtung ergänzt werden. Die jeweils unterste Palette wird selbsttätig mit einem Schlitten in die Wirkstellung, d.h. zum linken Abschnitt des Palettenportals transportiert. Danach wird der Palettenstapel 43 entsprechend abgesenkt. Die vollgestapelte Palette 30' wird aus dem linken Abschnitt des Palettenportals in die in Fig. 1 rechts mit strichierten Linien angedeutete Stellung gebracht. Sie wird dann dort z.B. mittels eines Gabelstaplers weitertransportiert.

Wie aus Fig. 3 ersichtlich ist, ist das freie Ende des unteren Armes 21 mit einer drehbaren Hubstange 31 und einem Greifer 32 versehen.

Der Greifer 32 ist - wie aus Fig. 3 ersichtlich - so dargestellt, daß er den jeweiligen Gegenstand untergreift. Demzufolge erfolgt die Ablage des Gegenstandes auf der Palette bzw. dem vorgesehenen Platz auf der Palette so, daß der Greifer immer in der gleichen Richtung herausgezogen werden kann.

Zu erwähnen ist noch, daß die beiden Hubzylinder 22 und 23 selbstverständlich nur dann notwendig sind, wenn die Anlieferung der Gegenstände, z.B. der Signaturstapel, auf einem tieferen Niveau erfolgt als die Lagenablage auf die Palette. Selbstverständlich können auch die Zuförderer so ausgebildet werden, daß sie die einzelnen Gegenstände in einer Höhe übergeben können, die annähernd der Höhe für die Ablage der Schicht entspricht.

**Patentansprüche**

1. Vorrichtung zum Palettieren gleichförmiger, druckempfindlicher Gegenstände, insbesondere von Stapeln aus gegebenenfalls mehrlagigen gefalzten Papierprodukten, nach einem vorbestimmten Ablegeschema, mit mindestens einem Einlaufförderer, einer Zu- und einer Abförderung für jeweils eine leere bzw. beladene Palette, **dadurch gekennzeichnet** daß die Übergabe der einzelnen Gegenstände vom Einlaufförderer zur Palette mittels eines in einer waagerechten Ebene bewegbaren mehrteiligen Armes mit mindestens drei Gelenken erfolgt, wobei das freie Ende des Armes als drehbarer und in der Höhe verstellbarer Greifer für den einzelnen Gegenstand ausgebildet und die Palette entsprechend der Beladung in der Höhe verstellbar ist.

2. Vorrichtung nach Anspruch 1, dadurch gekennzeichnet, daß ein Vorrat unbeladener Paletten stapelförmig ausgebildet ist und jeweils die unterste Palette in die Wirkstellung bringbar ist.

3. Vorrichtung nach Anspruch 1 oder 2, dadurch gekennzeichnet, daß der Arm an der Unterseite eines L-förmigen oder portalartigen Trägers gelenkig angeordnet ist.

4. Vorrichtung nach einem oder mehreren der Ansprüche 1 bis 3, dadurch gekennzeichnet, daß das Ablegeschema durch Verstellen der Armbewegung veränderbar ist.

5. Vorrichtung nach einem oder mehreren der Ansprüche 1 bis 4, dadurch gekennzeichnet, daß zwischen dem Einlaufförderer und dem Arm eine Drehscheibe o.dgl. für den Gegenstand vorgesehen ist.

6. Vorrichtung nach einem oder mehreren der Ansprüche 1 bis 5, dadurch gekennzeichnet, daß mindestens zwei Drehachsen des Armes mit jeweils einem gesonderten Elektromotor und einem Getriebe versehen sind.

7. Vorrichtung nach einem oder mehreren der Ansprüche 1 bis 6, dadurch gekennzeichnet, daß der Träger des Armes und das Drehlager des letzteren auf/im Träger stationär sind.

8. Vorrichtung nach einem oder mehreren der Ansprüche 1 bis 7, dadurch gekennzeichnet, daß zwischen dem Einlaufförderer und dem Arm ein Hubtisch eingeschaltet ist.

9. Vorrichtung nach einem oder mehreren der Ansprüche 1 bis 8, dadurch gekennzeichnet, daß der Palettenvorrat über der Auslaufstelle der beladenen Palette vorgesehen ist.

10. Vorrichtung nach Anspruch 9, dadurch gekennzeichnet, daß die untere in Wirkstellung bringbare Palette horizontal verschiebbar ist.

11. Vorrichtung nach einem oder mehreren der Ansprüche 1 bis 10, dadurch gekennzeichnet, daß eine intermittierend betätigbare Hubvorrichtung für die zu beladene Palette vorgesehen ist, welche aus einem Motor und einer Ausgleichsvorrichtung besteht.

12. Vorrichtung nach Anspruch 11, dadurch gekennzeichnet, daß die Ausgleichsvorrichtung aus einem Kettenzug mit einem Gegengewicht besteht.

13. Vorrichtung nach einem oder mehreren der Ansprüche 1 bis 12, dadurch gekennzeichnet, daß der Greifer an einer drehbaren und in der Höhe verstellbaren Stange angebracht ist.

FIG. 3

FIG. 1

FIG. 2